# EUROPEAN PATENT APPLICATION

(11) **EP 4 834 761 A1**
(43) Date of publication of application: **04.11.2026**
(21) Application number: 23963133.6
(22) Date of filing: 27.12.2023
(51) Int. Cl.: B64D 1/00, B64U 10/16, B64U 20/50, B64U 101/40

(54) **WORK-PERFORMING AERIAL VEHICLE**

(71) Applicant: KUBOTA CORPORATION, Osaka-shi, Osaka 530-0011 (JP)
(72) Inventor: WATANABE Kojiro, Sakai-shi, Osaka 590-0908 (JP)
(74) Representative: Cabinet Beau de Loménie
(86) International application number: PCT/JP2023/046982
(87) International publication number: WO 2025/141784

(57) **Abstract**

A work aerial vehicle includes: an aerial vehicle 1; a work device 2 capable of performing a predetermined operation; and a rod-shaped member 3 configured to couple the aerial vehicle 1 and the work device 2 to each other, wherein the rod-shaped member 3 includes a swing section 34 swingable relative to the aerial vehicle 1, and the swing section 34 is not swingable about an axis A3 extending along an up-down direction of the aerial vehicle 1, or swinging of the swing section 34 about the axis A3 extending along the up-down direction of the aerial vehicle 1 is restricted.

## Description

### Technical Field

The present invention relates to a work aerial vehicle.

### Background Art

Patent Document 1 describes a work device that performs a predetermined operation and that is suspended from an unmanned aircraft via a coupling part made of a wire, a cord, a chain, or the like. This work device performs a coating operation on a wall surface in the air while suspended from the unmanned aircraft.

### Prior Art Document

### Patent Document

Patent Document 1: JP2023-83932 A

### Disclosure of the Invention

### Problem to be Solved by the Invention

In the case of the work device described in Patent Document 1, as a result of the unmanned aircraft rotating about a vertical axis, the work device coupled to the unmanned aircraft via the coupling part is also rotated about the vertical axis. Accordingly, it is possible to redirect the work device.

However, since the coupling part is made of a wire, a cord, a chain, or the like, the coupling part may become twisted when the unmanned aircraft rotates about the vertical axis. This may make it difficult for the operator to redirect the work device to an intended direction.

It is an object of the present invention to provide a work aerial vehicle that allows a work device to be easily redirected to an intended direction.

### Means for Solving Problem

A work vehicle according to the present invention includes: an aerial vehicle; a work device configured to perform a predetermined operation; and a rod-shaped member coupling the aerial vehicle and the work device to each other, the rod-shaped member including a swing section swingable relative to the aerial vehicle, and the swing section not being swingable about an axis extending along an up-down direction of the aerial vehicle, or swinging of the swing section about the axis extending along the up-down direction of the aerial vehicle being restricted.

According to the present invention, as compared with a configuration in which the aerial vehicle and the work device are coupled to each other using a wire, a cord, a chain, or the like, the work device can be easily redirected by redirecting the aerial vehicle about the axis extending along the up-down direction.

The rod-shaped member includes the swing section. Accordingly, even in a case where shaking occurs in the aerial vehicle when the aerial vehicle is in flight, the shaking of the aerial vehicle is less likely to be transmitted to the work device. Accordingly, the work device coupled to the aerial vehicle is less likely to shake, thus making it easy for the work device to perform the predetermined operation.

In the present invention, it is preferable that the swing section is swingable about an axis extending along a left-right direction of the aerial vehicle, and is swingable about an axis extending along a front-rear direction of the aerial vehicle.

The posture of the aerial vehicle may be inclined forward, rearward, rightward, or leftward by strong wind or the like. In this case, the posture of the work device coupled to the aerial vehicle by the rod-shaped member is also inclined forward, rearward, rightward, or leftward. According to the present invention, even in a case where the aerial vehicle is inclined forward, rearward, rightward, or leftward, the swing section makes the posture of the work device less likely to be changed accidentally. This makes it easier for the work device coupled to the aerial vehicle to perform the predetermined operation.

In the present invention, it is preferable that the rod-shaped member includes a first swing section located at an end portion of the rod-shaped member on an aerial vehicle side as the swing section, and a second swing section located at an end portion of the rod-shaped member on a work device side as the swing section.

According to the present invention, in a case where shaking occurs in the aerial vehicle when the aerial vehicle is in flight, the first swing section makes the swinging of the aerial vehicle less likely to be transmitted to the rod-shaped member. In a case where shaking occurs in the work device, the second swing section makes the shaking of the work device less likely to be transmitted to the rod-shaped member. Consequently, the posture of the rod-shaped member is maintained. Accordingly, in a case where one of the aerial vehicle and the work device is inclined, the rod-shaped member is less likely to be inclined, and therefore the position of the other one of the aerial vehicle and the work device is less likely to be changed by the inclination of the rod-shaped member.

In the present invention, it is preferable that the swing section is formed by a universal joint.

According to the present invention, even in a case where the aerial vehicle is inclined forward, rearward, rightward, or leftward, the swing section makes the posture of the work device less likely to be changed accidentally.

In the present invention, it is preferable that the rod-shaped member is configured to be bendable.

When the aerial vehicle is in flight, the rod-shaped member may come into contact with an operation target region. When the rod-shaped member comes into contact with the operation target region, the impact from the rod-shaped member is transmitted to the aerial vehicle, and the posture of the aerial vehicle is likely to be disrupted. According to the present invention, even in a case where the rod-shaped member comes into contact with the operation target region, the rod-shaped member is bent, thus making the impact from the rod-shaped member less likely to be transmitted to the aerial vehicle. Accordingly, the posture of the aerial vehicle is less likely to be disrupted.

In the present invention, it is preferable that the rod-shaped member is configured to be extendable and retractable in a lengthwise direction thereof.

According to the present invention, even in a case where the rod-shaped member comes into contact with the operation target region, the rod-shaped member extends and retracts in the lengthwise direction, thus making the impact from the rod-shaped member less likely to be transmitted to the aerial vehicle. Accordingly, the posture of the aerial vehicle is less likely to be disrupted.

In the present invention, it is preferable that, while the aerial vehicle is in flight, the rod-shaped member is changeable in posture between an operating posture, in which the rod-shaped member extends along the up-down direction of the aerial vehicle, and a storage posture, in which the rod-shaped member extends along a front-rear direction of the aerial vehicle.

In a case where the rod-shaped member is in the operating posture extending along the up-down direction of the aerial vehicle, the rod-shaped member is likely to come into contact with the operation target region during landing of the aerial vehicle. This makes it difficult for the aerial vehicle to land in the operating posture. According to the present invention, the rod-shaped member takes the storage posture extending along the front-rear direction of the aerial vehicle, whereby the rod-shaped member is made more compact in the up-down direction than in the operating posture. Accordingly, the rod-shaped member is less likely to come into contact with the operation target region during landing of the aerial vehicle, thus making it easy for the aerial vehicle to land.

In the present invention, it is preferable that the aerial vehicle includes a plurality of rotors, and the rod-shaped member is located outside rotation ranges of the rotors in a plan view in the storage posture.

According to the present invention, in the storage posture, the rod-shaped member does not obstruct the air flow generated when the rotor is driven, and therefore the aerial vehicle can fly stably.

In the present invention, it is preferable that the aerial vehicle includes a winch configured to wind a wire connected to the rod-shaped member, and the rod-shaped member is brought into the storage posture from the operating posture by the wire being wound up by the winch.

According to the present invention, the posture change of the rod-shaped member can be easily performed using the winch.

In the present invention, it is preferable that the work aerial vehicle further includes a harness routed between the aerial vehicle and the work device, wherein the harness is routed along the rod-shaped member.

According to the present invention, the harness that connects the aerial vehicle and the work device to each other can be easily routed along the rod-shaped member.

In the present invention, it is preferable that the rod-shaped member includes an accommodating section configured to accommodate an electric component or an agricultural material, and the accommodating section is fixed at a position different from the work device in a lengthwise direction of the rod-shaped member.

According to the present invention, the accommodating section can be disposed in the rod-shaped member at a position at which the accommodating section is less likely to interfere with the work device.

In the present invention, it is preferable that the accommodating section is fixed to the rod-shaped member in a posture in which a lengthwise direction of the accommodating section extends along the rod-shaped member.

According to the present invention, the accommodating member can be stably supported by the rod-shaped member.

### Brief Description of the Drawings

FIG. 1 is a left side view showing a work aerial vehicle whose rod-shaped member is in an operating posture.
FIG. 2 is a left side view showing the work aerial vehicle whose rod-shaped member is in a storage posture.
FIG. 3 is a front view showing the work aerial vehicle whose rod-shaped member is in the operating posture.
FIG. 4 is a plan view showing the work aerial vehicle whose rod-shaped member is in the storage posture.
FIG. 5 is a block diagram showing the work aerial vehicle.
FIG. 6 is a left side view showing another example of the work aerial vehicle whose rod-shaped member is in the operating posture.
FIG. 7 is a front view showing another example of the work aerial vehicle whose rod-shaped member is in the operating posture.

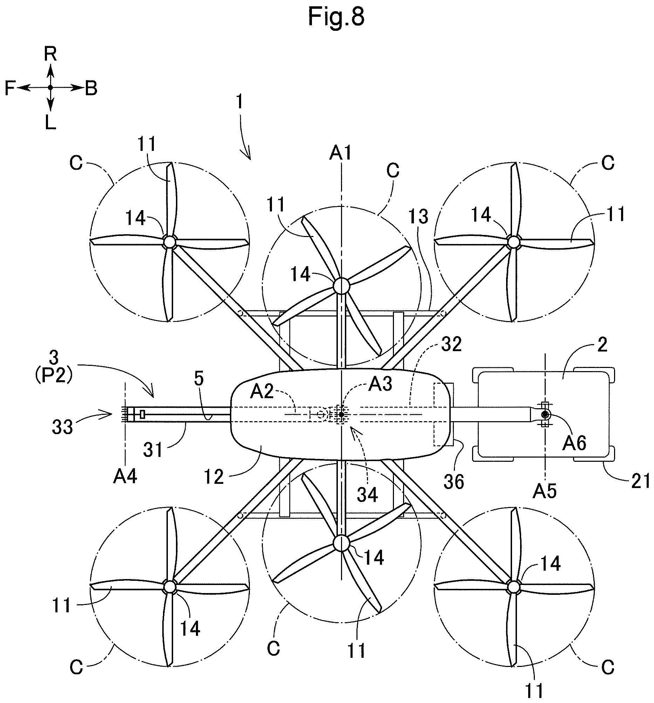

FIG. 8 is a plan view showing another example of the work aerial vehicle whose rod-shaped member is in the storage posture.

### Best Mode for Carrying out the Invention

A work aerial vehicle according to the present invention will be described below with reference to the drawings. Note that, in the following description, the direction indicated by the arrow F in the drawings is defined as a "front side", the direction indicated by the arrow B is defined as a "rear side", the direction indicated by the arrow U is defined as an "upper side", the direction indicated by the arrow D is defined as a "lower side", the direction indicated by the arrow R is defined as a "right side", and the direction indicated by the arrow L is defined as a "left side".

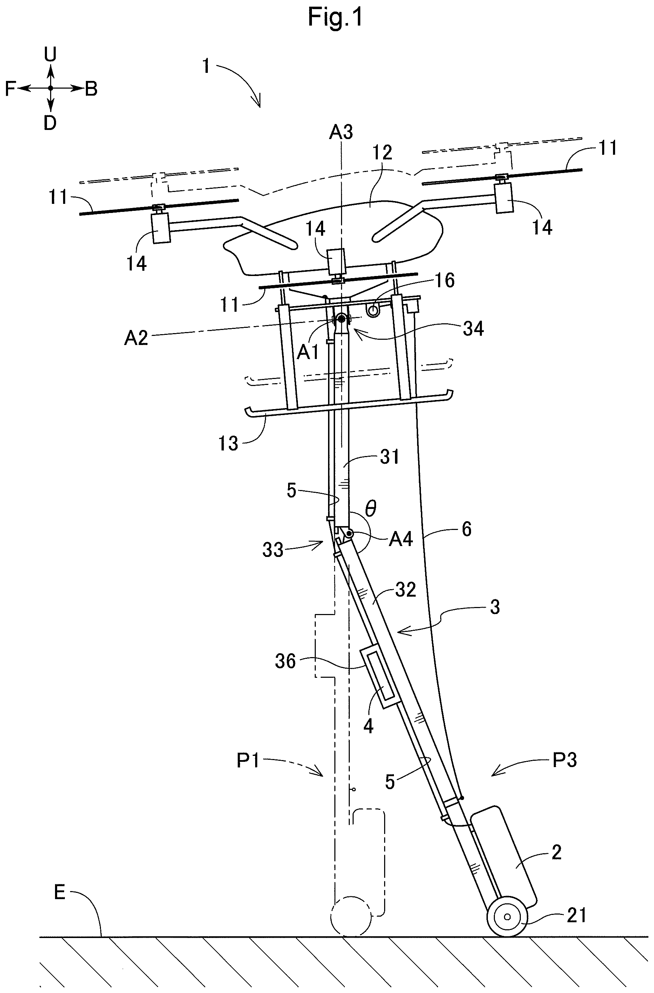

As shown in FIG. 1, the work aerial vehicle includes an aerial vehicle 1, a work device 2 capable of performing a predetermined operation, and a rod-shaped member 3 that couples the aerial vehicle 1 and the work device 2 to each other. The aerial vehicle 1 is coupled to an upper portion of the rod-shaped member 3, and the work device 2 is coupled to a lower portion of the rod-shaped member 3.

The aerial vehicle 1 is capable of autonomous flight or flight through remote control using a remote controller or the like. The aerial vehicle 1 is an unmanned aircraft that cannot be boarded by a person due to its structure. In the present embodiment, the aerial vehicle 1 is a drone including a plurality of rotors 11. The present invention is not limited thereto, and the aerial vehicle 1 may be an unmanned helicopter or the like, for example.

The work device 2 performs the predetermined operation while in contact with the ground in an operation target region E. The work device 2 cannot be boarded by a person due to its structure, and does not include a driving section on which an operator rides. In the present embodiment, the work device 2 is a sowing device that performs a crop sowing operation. The work device 2 includes wheels 21 for moving in the operation target region E while being towed by the aerial vehicle 1. The present invention is not limited thereto, and the work device 2 may include a travel device, and the wheels 21 may be driven. The work device 2 need not perform the predetermined operation while in contact with the ground in the operation target region E, and need not include the wheels 21.

The operation target region E is a region in which the work device 2 performs the operation. The operation target region E may be a field, a region around a field, a forest, or the like.

The rod-shaped member 3 includes a first swing section 34 (corresponding to a swing section) capable of swinging relative to the aerial vehicle 1. The first swing section 34 is formed by a universal joint.

The first swing section 34 is swingable about an axis A1 (pitch direction) extending along the left-right direction of the aerial vehicle 1, and is swingable about an axis A2 (roll direction) extending along the front-rear direction of the aerial vehicle 1. The first swing section 34 does not swing about an axis A3 (yaw direction) extending along the up-down direction of the aerial vehicle 1.

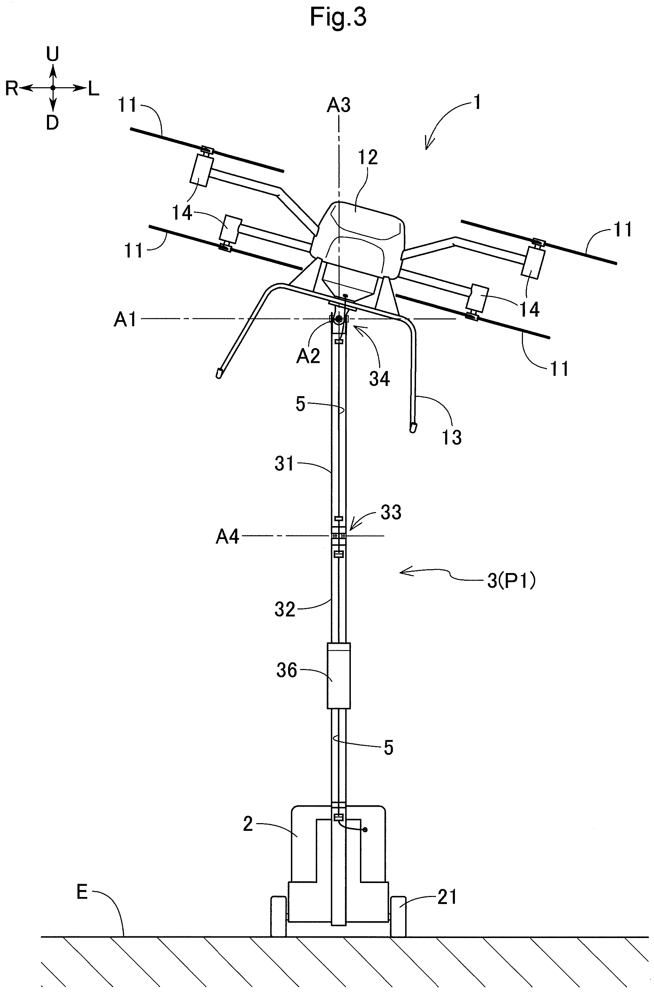

In a case where the aerial vehicle 1 is in a posture inclined downwardly to the left as shown in FIG. 3, the first swing section 34 swings about the axis A2. Thus, the posture of the work device 2 remains unchanged even in a case where the aerial vehicle 1 accidentally becomes inclined due to wind or the like. Accordingly, the work device 2 is less likely to be affected by an accidental posture change of the aerial vehicle 1.

### Aerial Vehicle

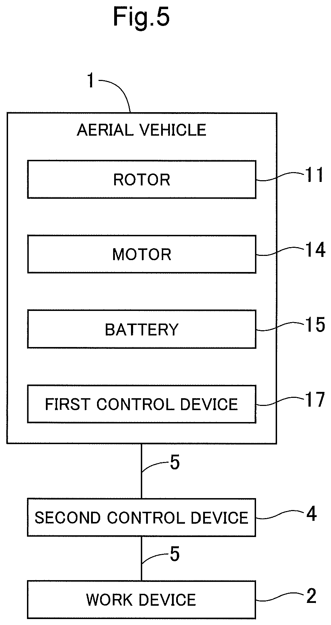

As shown in FIGS. 1 and 5, the aerial vehicle 1 includes a vehicle body 12, a skid 13 provided below the vehicle body 12, a plurality of motors 14 that drive the rotors 11, a battery 15 that supplies power to the motors 14, and a first control device 17 that controls the aerial vehicle 1.

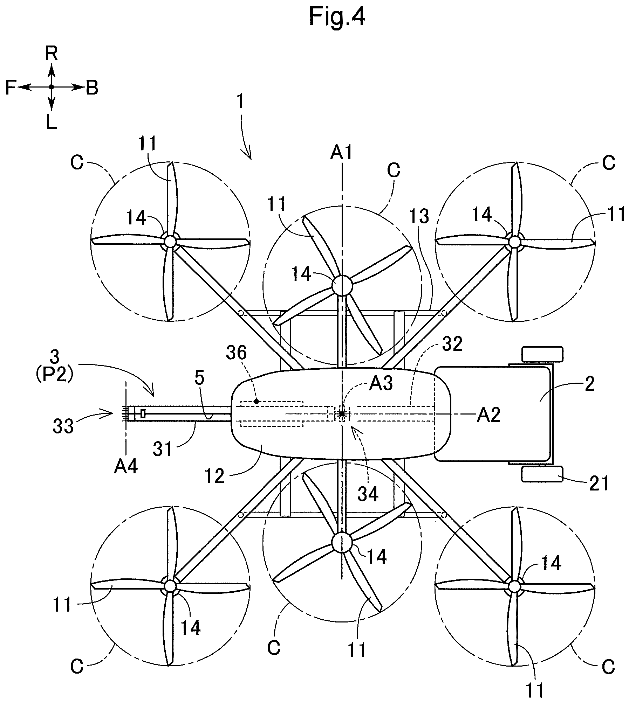

As shown in FIG. 4, each of the rotors 11 includes a rotary vane that rotates about an axis extending in the up-down direction. A plurality of rotors 11 are arranged in the front-rear direction on the right side relative to the vehicle body 12. Also, a plurality of rotors 11 are arranged in the front-rear direction on the left side relative to the vehicle body 12.

A plurality of rotors 11 are arranged in the left-right direction on the front side relative to the vehicle body 12. Also, a plurality of rotors 11 are arranged in the left-right direction on the rear side relative to the vehicle body 12.

In the present embodiment, six rotors 11 are provided. The present invention is not limited thereto, and the number of the rotors 11 may be less than six, or may be seven or more.

As shown in FIG. 1, the skid 13 includes a plurality of vertical members extending in a direction away from the vehicle body 12, and a coupling member that couples the plurality of vertical members to each other.

The first control device 17 includes a storage unit and a CPU that executes a program. The storage unit is configured, for example, by an HDD, a ROM, a nonvolatile memory, or the like.

The motors 14 are located at proximal end portions of the plurality of rotors 11. The rotors 11 are driven by rotation of the motors 14. In FIG. 4, the dash-dot line indicates a rotation range C of each of the rotors 11.

### Rod-Shaped Member

As shown in FIG. 1, the rod-shaped member 3 includes a first portion 31 located on the aerial vehicle 1 side, a second portion 32 located on the work device 2 side relative to the first portion 31, a bending section 33 that enables the second portion 32 to be bent relative to the first portion 31 about an axis A4 extending along the left-right direction of the aerial vehicle 1, and an accommodating section 36 capable of accommodating an electric component or an agricultural material.

In the present embodiment, the rod-shaped member 3 is made of steel. The present invention is not limited thereto, and the rod-shaped member 3 may be made of any other metal such as stainless steel.

The rod-shaped member 3 is a cross-sectionally square member configured to be bendable by the bending section 33. The present invention is not limited thereto, and the rod-shaped member 3 may have any shape. For example, the rod-shaped member 3 may be circular in a cross-sectional view.

The first swing section 34 is located at an end portion of the rod-shaped member 3 on the aerial vehicle 1 side. In other words, the first swing section 34 is located at a portion connected to the aerial vehicle 1. The first swing section 34 is provided at the first portion 31. The present invention is not limited thereto, and the first swing section 34 may be located at any position of the rod-shaped member 3 between the end portion on the aerial vehicle 1 side and the bending section 33.

As shown in FIG. 1, the accommodating section 36 has a box shape. The accommodating section 36 accommodates a second control device 4 that controls the work device 2. The present invention is not limited thereto, and the accommodating section 36 may have any shape. For example, the accommodating section 36 may have a cylindrical shape.

The accommodating section 36 is provided at the second portion 32. The accommodating section 36 is fixed to the rod-shaped member 3 at a position different from the work device 2 in the lengthwise direction. Specifically, the accommodating section 36 is fixed on the bending section 33 side relative to the work device 2 in the lengthwise direction of the rod-shaped member 3. In addition, the accommodating section 36 is located opposite to the work device 2 in the widthwise direction of the rod-shaped member 3.

In the present embodiment, the accommodating section 36 is fixed to the rod-shaped member 3 in a posture in which the lengthwise direction of the accommodating section 36 extends along the lengthwise direction of the rod-shaped member 3.

A harness 5 extending between the aerial vehicle 1 and the work device 2 is routed along the rod-shaped member 3. The harness 5 extends from the aerial vehicle 1 to the second control device 4 inside the accommodating section 36. In addition, the harness 5 extends from the second control device 4 to the work device 2.

The second control device 4 includes a storage unit and a CPU that executes a program. The storage unit is configured, for example, by an HDD, a ROM, a nonvolatile memory, or the like. As shown in FIG. 4, the second control device 4 is capable of transmitting and receiving information to and from the work device 2 via the harness 5. In addition, power is supplied to the second control device 4 from the battery 15 of the aerial vehicle 1 via the harness 5.

The work device 2 is connected to the aerial vehicle 1 via the harness 5. This enables the work device 2 to transmit and receive information to and from the aerial vehicle 1 or to input and output power to and from the aerial vehicle 1.

### Posture Change to Storage Posture

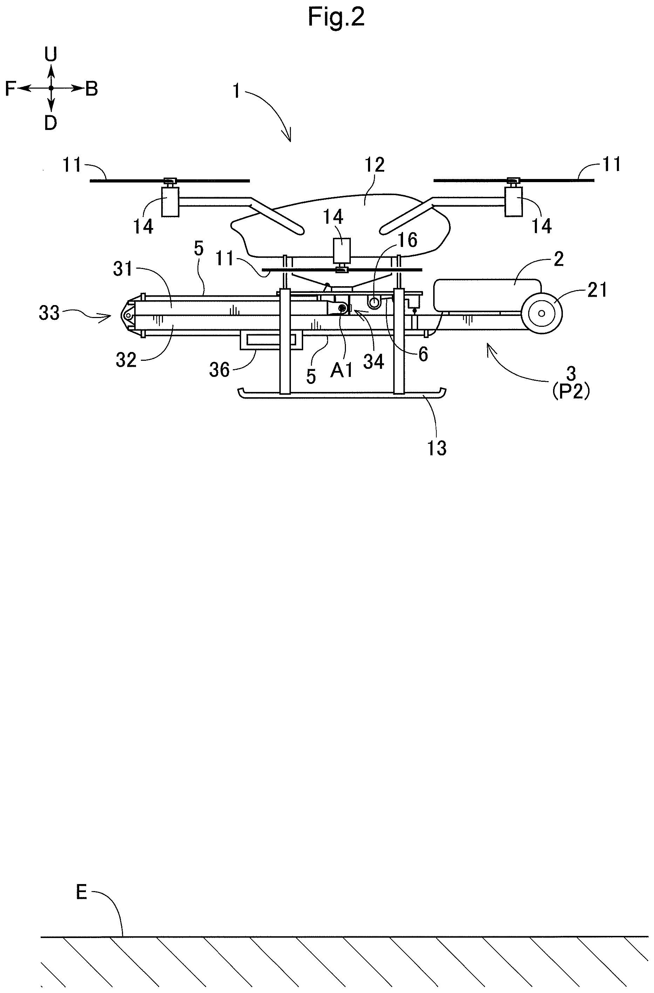

As shown in FIGS. 1 and 2, when the aerial vehicle 1 is in flight, the rod-shaped member 3 is changeable in posture between a first operating posture P1 (corresponding to an operating posture) extending along the up-down direction of the aerial vehicle 1, and a storage posture P2 extending along the front-rear direction of the aerial vehicle 1.

In FIG. 1, the dashed double-dotted line indicates the first operating posture P1 of the rod-shaped member 3. In the first operating posture P1, the first portion 31 and the second portion 32 are collinear with each other. FIG. 2 shows the storage posture P2 of the rod-shaped member 3.

The aerial vehicle 1 includes a winch 16 capable of winding up a wire 6 connected to the rod-shaped member 3, and the rod-shaped member 3 is brought into the storage posture P2 from the first operating posture P1 as a result of the wire 6 being wound up by the winch 16.

Specifically, while the rod-shaped member 3 is in the first operating posture P1, the first control device 17 causes a motor included in the winch 16 to be driven in one direction. Consequently, the wire 6 is wound up, and the first portion 31 of the rod-shaped member 3 is swung forward about the axis A1. In addition, the second portion 32 is swung rearward about the axis A4. This brings the rod-shaped member 3 into the storage posture P2.

While the rod-shaped member 3 is in the storage posture P2, the first control device 17 causes the motor included in the winch 16 to be driven in the other direction. This causes the wire 6 to extend, whereby the second portion 32 of the rod-shaped member 3 is swung forward about the axis A4. In addition, the first portion 31 of the rod-shaped member 3 is swung rearward about the axis A1. This brings the rod-shaped member 3 into the first operating posture P1.

As shown in FIG. 4, when the rod-shaped member 3 has been brought into the storage posture P2, the accommodating section 36 is located forward of the work device 2. Accordingly, as compared with a case where the accommodating section 36 is fixed at the same position as the work device 2 in the lengthwise direction of the rod-shaped member 3, the weight balance in the front-rear direction is maintained when the rod-shaped member 3 has been brought into the storage posture P2.

While the rod-shaped member 3 is in the first operating posture P1, the accommodating section 36 is located opposite to the direction in which the second portion 32 swings when the rod-shaped member 3 is brought into the storage posture P2. Specifically, while the rod-shaped member 3 is in the first operating posture P1, the accommodating section 36 is fixed to a front surface of the rod-shaped member 3. Accordingly, when the rod-shaped member 3 has been brought into the storage posture P2, the accommodating section 36 is less likely to interfere with the first portion 31.

The harness 5 is routed on a side opposite to the wire 6 across the rod-shaped member 3. Accordingly, when the rod-shaped member 3 has been changed in posture from the first operating posture P1 to the storage posture P2, the harness 5 is less likely to get entangled with the wire 6 wound up by the winch 16.

As shown in FIG. 4, the rod-shaped member 3 is located outside the rotation ranges C of the rotors 11 in the storage posture P2 in a plan view. The rod-shaped member 3 is located between the rotors 11 located rightward of the vehicle body 12, and the rotors 11 located leftward of the vehicle body 12. Specifically, the rod-shaped member 3 extends in the front-rear direction at a position at which the rod-shaped member 3 overlaps the vehicle body 12 in the storage posture P2.

The second portion 32 is longer in the lengthwise direction than the first portion 31. Specifically, the length in the lengthwise direction of the second portion 32 is approximately twice that of the first portion 31. Accordingly, in the storage posture P2, the weight balance between the weight of the portion of the rod-shaped member 3 that is located forward of the vehicle body 12, and the weight of the portion of the rod-shaped member 3 that is located rearward of the vehicle body 12 is easily maintained.

### Posture Change to Second Operating Posture

In FIG. 1, the solid line indicates a second operating posture P3 of the rod-shaped member 3. As shown in FIG. 1, while the rod-shaped member 3 is in the first operating posture P1, in which the first portion 31 extends in the up-down direction, the second portion 32 is bent rearward about the axis A4 by the bending section 33. This brings the rod-shaped member 3 into the second operating posture P3 (corresponding to an operating posture) from the first operating posture P1. At this time, an angle θ formed between the first portion 31 and the second portion 32 in a side view is an obtuse angle. In the second operating posture P3, the aerial vehicle 1 can fly at a position ahead of the work device 2, and therefore the work device 2 can be easily towed by the aerial vehicle 1.

### Alternative Embodiments

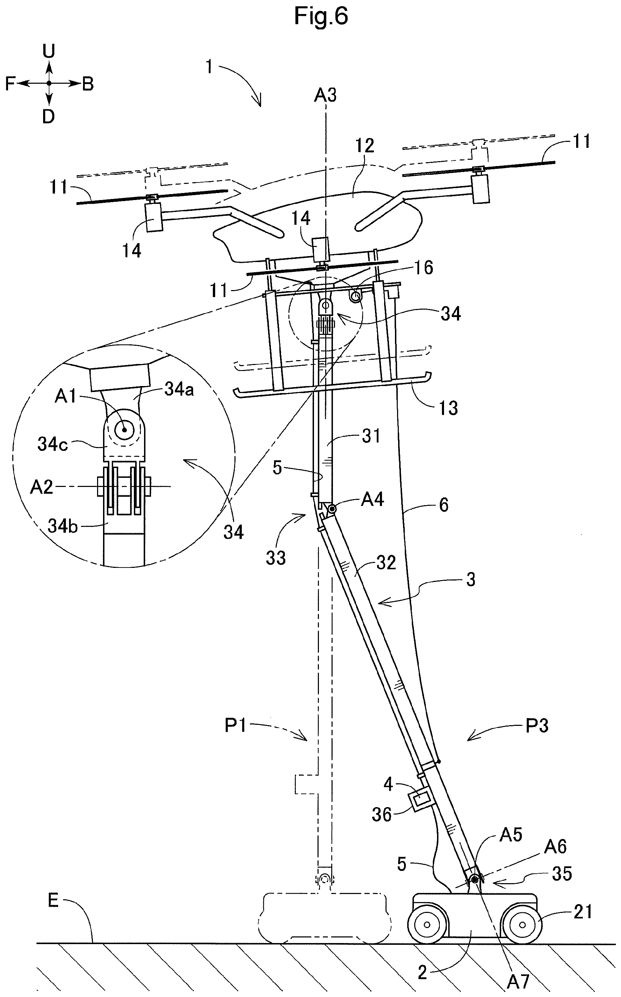

The present invention is not limited to the above-described embodiment. For example, the present invention may be configured as described in the following alternative embodiments. In the alternative embodiments described below, the same configurations as those of the above embodiment are denoted by the same reference numerals and signs as those of the above example.
(1) In the above-described embodiment, the work device 2 is a sowing device. The present invention is not limited thereto, and the work device 2 may have a different configuration. For example, as shown in FIG. 6, the work device 2 may be a mowing device that mows grass in the operation target region E. Also, the work device 2 may be a cultivating device, an agricultural chemical spraying device, a fertilizing device, a grass collecting device, a harvesting device, or the like.
(2) As shown in FIG. 6, the rod-shaped member 3 may include a second swing section 35 (corresponding to a swing section) swingable relative to the aerial vehicle 1. The second swing section 35 is formed by a universal joint.

The second swing section 35 is swingable about an axis A5 (pitch direction) extending along the left-right direction of the aerial vehicle 1, and is swingable about an axis A6 (roll direction) extending along the front-rear direction of the aerial vehicle 1. In addition, the second swing section 35 does not swing about an axis A7 (yaw direction) extending along the up-down direction of the aerial vehicle 1.

The second swing section 35 is located at an end portion of the rod-shaped member 3 on the work device 2 side. In other words, the second swing section 35 is located at a portion connected to the work device 2. The second swing section 35 is provided at the second portion 32. The present invention is not limited thereto, and the second swing section 35 may be located at any position of the rod-shaped member 3 between the end portion thereof on the work device 2 side and the bending section 33.

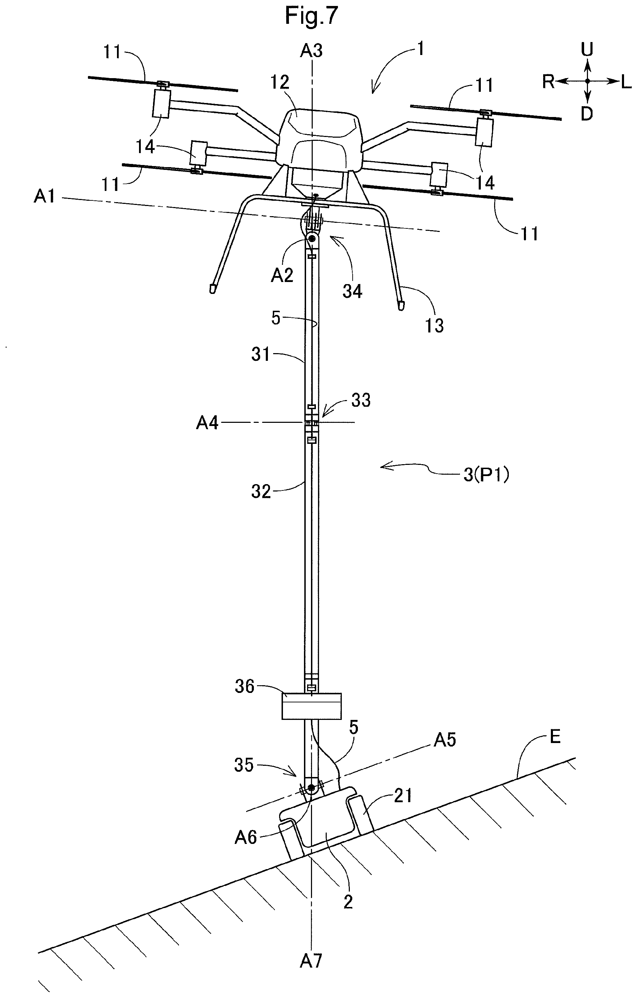

As shown in FIG. 7, in a case where the operation target region E is an inclined ground surface, the work device 2 may be in a posture inclined relative to the horizontal plane. In the present embodiment, the work device 2 is in a posture inclined downwardly to the left. Since the second swing section 35 is swingable about the axis A6, the work device 2 can perform an operation while the aerial vehicle 1 is located directly above the work device 2.

(3) In the above-described embodiment, the first swing section 34 and the second swing section 35 are each formed by a universal joint. The present invention is not limited thereto, and at least one of the first swing section 34 and the second swing section 35 may have a different configuration. For example, as shown in FIG. 6, the first swing section 34 may include a first connecting member 34a, a second connecting member 34b, and a third connecting member 34c.

An end portion of the first connecting member 34a on the work device 2 side is swingable about the axis A1 relative to an end portion of the second connecting member 34b on the aerial vehicle 1 side. The end portion of the second connecting member 34b on the aerial vehicle 1 side is swingable about the axis A2 relative to an end portion of the third connecting member 34c on the work device 2 side.

(4) At least one of the first swing section 34 and the second swing section 35 may be swingable about the axes A3 and A7 extending along the up-down direction of the aerial vehicle 1. In this case, at least one of the first swing section 34 and the second swing section 35 includes a motor.

In a case where the rod-shaped member 3 is in the storage posture P2, the first control device 17 causes the rod-shaped member 3 to swing about the axes A3 and A7 relative to the aerial vehicle 1 using the motor. In a case where the rod-shaped member 3 is in the first operating posture P1 or the second operating posture P3, the first control device 17 does not cause the rod-shaped member 3 to swing about the axes A3 and A7 relative to the aerial vehicle 1 using the motor. In other words, in a case where the rod-shaped member 3 is in the first operating posture P1, swinging of at least one of the first swing section 34 and the second swing section 35 about the axes A3 and A7 may be restricted.

(5) The rod-shaped member 3 may be configured in such a manner that the bending section 33 enables the second portion 32 to be bent forward about the axis A4.

(6) The rod-shaped member 3 may be configured to be extendable and retractable along the lengthwise direction of the rod-shaped member 3.

(7) As shown in FIG. 7, the accommodating section 36 may be fixed to the rod-shaped member 3 in a posture in which the lengthwise direction of the accommodating section 36 is oriented in a direction orthogonal to the lengthwise direction of the rod-shaped member 3.

(8) The accommodating section 36 may accommodate a battery that supplies power to the aerial vehicle 1 or the work device 2. Also, the accommodating section 36 may accommodate an agricultural material therein. For example, in a case where the work device 2 is a sowing device, the agricultural material may be crop seeds.

(9) The second control device 4 may be provided in the work device 2. In this case, the harness 5 may directly connect the aerial vehicle 1 and the work device 2 to each other.

(10) The accommodating section 36 may be fixed to the same position as the work device 2 in the lengthwise direction of the rod-shaped member 3, and be located opposite to the work device 2 in the widthwise direction of the rod-shaped member 3.

(11) In the above-described embodiment, the aerial vehicle 1 includes the winch 16 capable of winding up the wire 6 connected to the rod-shaped member 3. The present invention is not limited thereto, and the rod-shaped member 3 may include a winch 16 capable of winding up the wire 6 connected to the aerial vehicle 1.

(12) While the rod-shaped member 3 is in the first operating posture P1, the first control device 17 causes the motor included in the first swing section 34 to be driven to one side. Accordingly, the first portion 31 of the rod-shaped member 3 is swung forward about the axis A1. In addition, the first control device 17 causes the motor provided in the winch 16 to be driven. Consequently, the wire 6 may be wound up, whereby the second portion 32 may be swung rearward about the axis A4. The present invention is not limited thereto, and the first portion 31 of the rod-shaped member 3 may be swung forward about the axis A1 by extension/retraction of an actuator.

(13) The rod-shaped member 3 may be a tubular member having a space therein. In this case, the harness 5 may be routed inside the rod-shaped member 3 along the lengthwise direction of the rod-shaped member 3.

### Industrial Applicability

The present invention is applicable to an aerial vehicle that performs a predetermined operation.

### Description of Reference Signs

1: Aerial vehicle
11: Rotor
16: Winch
2: Work device
3: Rod-shaped member
34: First swing section (swing member)
35: Second swing section (swing member)
36: Accommodating section
5: Harness
6: Wire
C: Rotation range
P1: Operating posture
P2: Storage posture

## Claims

1. A work aerial vehicle comprising:
an aerial vehicle;
a work device configured to perform a predetermined operation; and
a rod-shaped member coupling the aerial vehicle and the work device to each other,
the rod-shaped member including a swing section swingable relative to the aerial vehicle, and
the swing section not being swingable about an axis extending along an up-down direction of the aerial vehicle, or swinging of the swing section about the axis extending along the up-down direction of the aerial vehicle being restricted.

2. The work aerial vehicle according to claim 1, wherein
the swing section is swingable about an axis extending along a left-right direction of the aerial vehicle, and is swingable about an axis extending along a front-rear direction of the aerial vehicle.

3. The work aerial vehicle according to claim 1, wherein
the rod-shaped member includes a first swing section located at an end portion of the rod-shaped member on an aerial vehicle side as the swing section, and a second swing section located at an end portion of the rod-shaped member on a work device side as the swing section.

4. The work aerial vehicle according to claim 1, wherein
the swing section is formed by a universal joint.

5. The work aerial vehicle according to claim 1, wherein
the rod-shaped member is configured to be bendable.

6. The work aerial vehicle according to claim 1, wherein
the rod-shaped member is configured to be extendable and retractable in a lengthwise direction.

7. The work aerial vehicle according to claim 5, wherein,
while the aerial vehicle is in flight, the rod-shaped member is changeable in posture between an operating posture, in which the rod-shaped member extends along the up-down direction of the aerial vehicle, and a storage posture, in which the rod-shaped member extends along a front-rear direction of the aerial vehicle.

8. The work aerial vehicle according to claim 7, wherein
the aerial vehicle includes a plurality of rotors, and
the rod-shaped member is located outside rotation ranges of the rotors in a plan view in the storage posture.

9. The work aerial vehicle according to claim 7, wherein
the aerial vehicle includes a winch configured to wind a wire connected to the rod-shaped member, and
the rod-shaped member is brought into the storage posture from the operating posture by the wire being wound up by the winch.

10. The work aerial vehicle according to claim 1, further comprising
a harness routed between the aerial vehicle and the work device, wherein
the harness is routed along the rod-shaped member.

11. The work aerial vehicle according to claim 1, wherein
the rod-shaped member includes an accommodating section configured to accommodate an electric component or an agricultural material, and
the accommodating section is fixed at a position different from the work device in a lengthwise direction of the rod-shaped member.

12. The work aerial vehicle according to claim 11, wherein
the accommodating section is fixed to the rod-shaped member in a posture in which a lengthwise direction of the accommodating section extends along the rod-shaped member.
